# EUROPEAN PATENT SPECIFICATION

(11) **EP 0 544 374 B1**
(45) Date of publication and mention of the grant of the patent: **12.04.1995**
(21) Application number: 92203616.5
(22) Date of filing: 24.11.1992
(51) Int. Cl.: B41F 31/26, B41F 13/08, F16C 13/00, B65G 39/02, B41N 7/00

(54) **Roller, especially for application in a printing machine**
Walze, insbesondere zur Verwendung in einer Druckmaschine
Rouleau, en particulier destiné à être utilisé dans une machine à imprimer

(30) Priority: 27.11.1991 NL 9101983
(43) Date of publication of application: 02.06.1993
(73) Proprietor: BIS BOTH INDUSTRIAL SERVICES B.V., NL-2272 BG Voorburg (NL)
(72) Inventor: Vonk, Leo, NL-1171 PW Badhoevedorp (NL)
(74) Representative: Voncken, Bartholomeus Maria Christiaan

(56) References cited:
- EP-A- 0 270 825
- EP-A- 0 314 614
- US-A- 2 627 228

## Description

The invention relates to a roller such as printing roller, guide roller, inking roller, dampening roller or transferring roller, especially for application in a printing machine, such as a newspaper printing machine, comprising a central shaft to be journalled in the printing machine and a shell extending concentrically around said shaft.

Among others, rollers of this type are applied in large numbers in printing machines, such as newspaper printing machines or alike. In a first type of roller (inking roller, dampening roller or transferring roller) (see e.g. EP-A-0 270 825) a covering from resilient material, such as rubber or alike, is applied onto the shell, which wears during operation, such that those rollers have to be replaced regularly. Because the known rollers applied nowadays essentially are made of steel, replacing them is difficult. The space in which the rollers are present is narrow, whereas the mechanics often should lift beyond their physical limits when applying the rollers or removing them. In combination with the high weight of said rollers this leads to undesired working situations.

Also in a second type of roller (printing roller, guide roller), in which such a covering of resilient material is not present, the high weight is a disadvantage, for the large moments of inertia of the rollers coming therewith negatively influence the so called emergency stop time.

It is an object of the invention to provide a roller of the type referred to above, in which said disadvantages have been removed in a simple, but nevertheless effective way.

Thus the roller according to the invention is characterized in that the shell and shaft are essentially made of plastic material and that at least at both ends of said shaft respective metal, such as steel, jackets are provided extending up to the respective frontal end of said shaft.

Because the shell and shaft essentially have been made of a plastic material the roller according to the invention, compared to a conventional roller, comprises a considerably reduced weight. This brings about a number of advantages. During the replacement of rollers, of which the cover is worn out, applying or removing can occur easier because of the lower weight of the roller resulting from the applied plastic material. Further in the narrow spaces where the rollers are applied the mechanics can handle the rollers without excessive efforts. For handling conventional rollers which have been applied in wide newspaper printing machines two mechanics were necessary; for handling a corresponding roller according to the invention generally one mechanic is sufficient.

Another advantage of the lower weight of the roller according to the invention expresses itself in the lower moment of inertia of the roller. A lower moment of inertia of the roller is important in relation to the mass to be accelerated by the paper track in the case of guide rollers as well as in general in relation to the emergency stop time of the printing machine mentioned before in the case of emergency situations. The more the moment of inertia of rollers applied in a printing machine decreases the more the emergency stop time will decrease too. The importancy of the lower weight may appear from the fact, that in printing machines up to three-hundred rollers may be applied, which each may cause, as a consequence of the invention, a weight reduction of about fifty kilograms. The reduction of the combined moment of inertia obtained like this is huge.

Emergency situations may occur when for example a paper breakage occurs in the printing machine. The amount of lost paper then strongly depends on the emergency stop time; during each paper breakage there is a risk that paper is wound around the inking rollers or pressure rollers, thus increasing the thickness of the wound paper layers. Thus it is clear that a reduction of the emergency stop time at one hand leads to a reduction of the paper loss during paper breakage and at the other hand considerably reduces the risk on damages of the printing machine.

Further the plastic parts of the roller according to the invention offer a fine insulating capacity as compared to the conventional steel parts of a conventional roller. After a stand-still of the printing machine, for example as a result of maintenance, a cooling down occurs slower, such that a stable surface temperature of the rollers is regained faster, thus beneficially influencing the printing proces.

The lower weight of the rollers according to the invention further saves transportation costs towards and from the location where the covering of the rollers is replaced. Generally every transporting act of such rollers is simplified.

Moreover, due to the application of plastic material rust formation on the shell is prevented, which would occur because especially rollers of an inking device are regularly sprayed with water or are engaged by water acting very agressively. Finally the enhanced handling ability due to the lower weight leads to a reduced risk of damaging the rollers during their handling and storage.

However, to further minimize the risk on damages the steel jackets are applied at both ends of the shaft, such that especially the outer ends of the shaft, that are most prone to damages, are protected in an adequate way. Among others such rollers are stored in a vertical position, in which the roller rests on one shaft end. Due to the application of the steel jackets damaging said respective end of the shaft is then prevented.

The application of steel jackets on the central shaft, which further is entirely made of plastic material, offers further advantages. Machining the surface of the shaft, for example for applying recesses for locking the shaft, recesses for the reception of locking rings for bearings and for providing screw thread, is simpler in the metal surface than it would be in a plastic material surface. The precision with which the shaft can be machined is much higher in metal than it is in plastic material, whereas further the technics for realizing such machining methods are further developed for metal than for plastic material.

In a preferred embodiment of the roller according to the invention, comprising a central shaft to be journalled stationaryly in the printing machine and a shell to be journalled rotatingly on said central shaft, the jackets extend inwardly at least beyond the shell bearings. In such a roller, in which the central shaft during operation assumes a stationary position whereas the shell rotates around the central shaft through bearings, the shell bearings are thus provided on the jackets, like this enabling an exact positioning of the shell bearings.

In another handy embodiment of the roller according to the invention the frontal ends of the shell too comprise metal, such as steel, jacket-shaped parts. Constructively this may be realized when the jacket-shaped parts comprise outwardly extending extensions of the outer bearing seats of the shell bearings, said extensions covering the frontal ends of the shell. Like this the frontal ends of the shell too are protected against damages, for example during handling the roller.

In another embodiment of the roller according to the invention, of which the shaft exists of two shaft tubs integrally with the shell and to be journalled rotatably in the printing machine, it is possible that the shaft tubs and shell are made of a plastic material and that the jackets are provided at the shaft tubs. In such an embodiment the central shaft thus rotates relative to the printing machine, whereas said central shaft is united with the shell.

In a preferred embodiment of such a roller it is possible, that the axially innermost ends of the jackets comprise radially outwardly extending parts covering the frontal ends of the shell. Again, these parts take care of protecting the shell against damages.

Hereinafter the invention will be elucidated by means of the drawing, in which a number of embodiments of the roller according to the invention is illustrated.
Fig. 1 shows partly a longitudinal section of a first embodiment of the roller according to the invention;
Fig. 2 shows partly a longitudinal section of an alternative to the embodiment shown in Fig. 1;
Fig. 3 shows a corresponding view of a second embodiment of the roller according to the invention, and
Fig. 4 shows an alternative to the embodiment shown in Fig. 3.

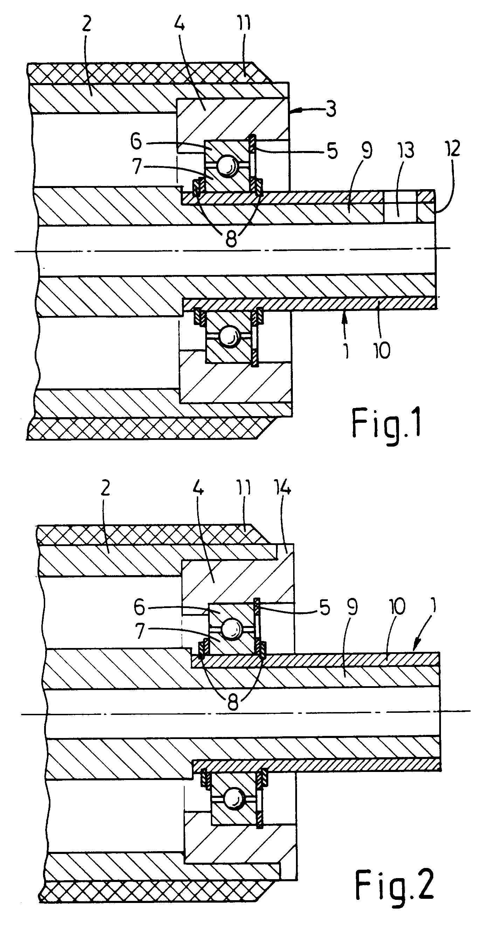

In Fig. 1 the end section is shown of a first embodiment of the roller according to the invention. This roller, which may comprise an inking roller, dampening roller or transferring roller for application in the inking machinery of a printing machine, such as a newspaper printing machine or alike, comprises a central shaft 1 to be journalled in the printing machine (not shown) and a shell 2 extending concentrically around said shaft. The shaft 1 is meant to be attached stationaryly in the printing machine; the shell 2 can rotate relative to the shaft through bearings 3 each substantially comprising an outer annular bearing seat 4 provided in the shell 2, a first bearing ring 6 connected with the bearing seat 4 through a locking ring 5 and a second inner bearing ring 7 concentrically with the first bearing ring 6. The bearing ring 7 is fixed onto the shaft 1 by means of locking rings 8.

The central shaft 1 mainly comprises a section 9 made of plastic material. At each end of the shaft 1 a metal, preferably steel, jacket 10 is provided on the plastic section 9. In the illustrated embodiment the plastic section 9 is narrowed at the respective end of the central shaft 1 for receiving said metal jacket 10. The jacket 10 may be attached to the plastic section 9 by any know means (for example adhesive, shrink fit or attachment means).

The shell 2 is also made of plastic material and supports at its outer circumference a covering 11 made of a resilient material, such as rubber or alike. This covering wears out during use of the roller and should be replaced regularly. When the roller is used as printing roller or guide roller this covering is not present.

The metal jacket 10 extends up to the frontal end 12 of the central shaft 1. This means that the part of the central shaft extending beyond the shell 2 is effectively protected against damages, for example when the roller, during storage, rests in a vertical position on the respective frontal end 12.

The locking rings 8 for locking the inner bearing ring 7 are received in angular grooves provided in the metal jacket; for fixing the central shaft in the printing machine it is possible that locking holes 13 are provided extending through the metal jacket 10 and the plastic section 9 of the central shaft 1. The exact location of these locking holes 13 is defined by the metal jacket 10; the holes in the plastic section 9 may be formed with some excess. Like this a difficult precise machining of the plastic section 9 is avoided.

Because the shell 2 is made of plastic material, whereas further the largest section of the central shaft 1 is made of plastic material, this roller comprises a low weight, compared to conventional, entirely steel, rollers, which beneficially influences the handling abilities of the roller. Further the roller as a result offers a low moment of inertia.

The embodiment of the roller according to the invention illustrated in Fig. 2 mainly corresponds with the embodiment shown in Fig. 1, such that corresponding parts are indicated with corresponding reference numbers. The only difference is, that the bearing seats 4 comprise at the frontal ends of the shell 2 outwardly extending extensions 14 covering the frontal ends of said shell 2. These extensions 14 provide a protection of the respective frontal ends of the shell 2 against damages.

In the embodiments of the roller according to the invention shown in Fig. 1 and Fig. 2 the metal jackets 10 extend inwardly at least beyond the bearings 3. This means that a roller according to the invention comprises two jackets 10 at the opposite ends of the central shaft 1. However, it is possible too that the two jackets are united to one single jacket extending along the entire length of the central shaft 1.

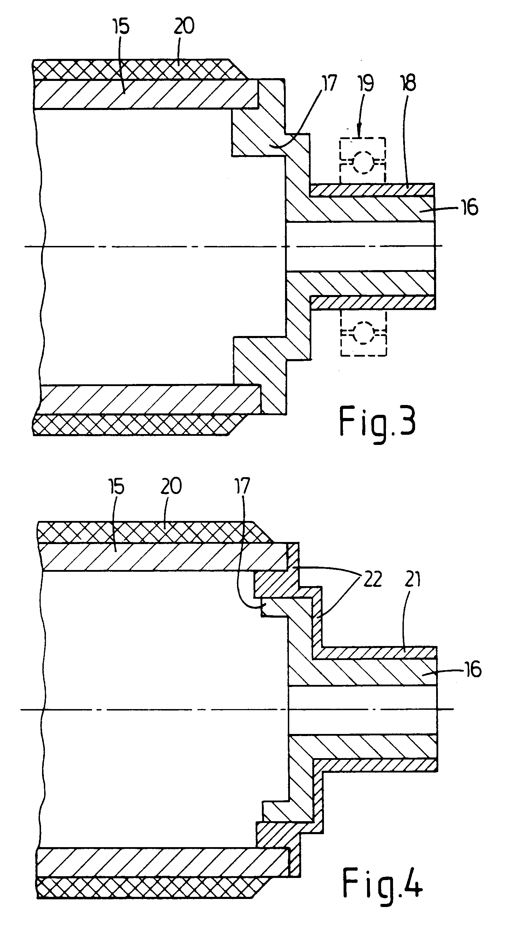

In Fig. 3 a further embodiment of the roller according to the invention is represented, in which, contrary to the previously described embodiments, the shaft of the roller is not applied stationaryly in the printing machine, but can rotate relative to the printing machine. To this end the central shaft of the roller comprises two shaft tubs 16 (of which in Fig. 3 only one is visible) united with the shell 15. The shaft tubs 16 and shell 15 both are made from a plastic material, wherein the connecting section 17 may have an appropriate shape in respect of strength and mechanical properties. In the illustrated embodiment the connecting section 17 is shaped step-like, whereas it may be provided with a protecting covering layer.

Each shaft tub 16 is provided with a jacket 18. In a way known (but not shown) this jacket can be fixed relative to the shaft tub 16.

Further in Fig. 3 it has been illustrated schematically in dotted lines that the shaft tubs 16 may be journalled in the printing machine (not shown) through bearings 19. On the outer circumference of the shell 15 again a resilient covering 20 is provided.

The embodiment of the roller shown in Fig. 4 too relates to a type roller as shown in Fig. 3. The shaft tubs 16, shell 15 and connecting section 17 again have been made of plastic material. Now the difference with Fig. 3 is that jackets 21 have been applied of which the axial inner ends comprise radially outwardly extending parts 22 covering the frontal ends of the shell 15. The shape of the radial parts 22 is adapted to the shape of the connecting section 17. Further an axially inwardly extending collar of the radial part 22 defines in the illustrated embodiment the connection between the shell 15 and the shaft tub 16. Using a jacket 21 shaped in such a way the end of the roller is entirely protected.

Also rollers, which will be applied to machines other than printing machines, fall within the scope of the claims.

## Claims

1. Roller, such as printing roller, guide roller, inking roller, dampening roller or transferring roller, especially for application in a printing machine, such as a newspaper printing machine, comprising a central shaft to be journalled in the printing machine and a shell extending concentrically around said shaft, wherein the shell and shaft are essentially made of plastic material and that at least at both ends of said shaft respective metal, such as steel, jackets are provided extending up to the respective frontal end of said shaft.

2. Roller according to claim 1, comprising a central shaft to be journalled stationaryly on the printing machine and a shell to be journalled rotatingly on said central shaft, **characterized** in that the jackets extend inwardly at least beyond the shell bearings.

3. Roller according to claim 2, **characterized** in that both jackets are united defining one single jacket extending along the entire length of said shaft.

4. Roller according to claim 1, 2 or 3, **characterized** in that the frontal ends of the shell too comprise metal, such as steel, jacket-shaped parts.

5. Roller according to claim 4, **characterized** in that the jacket-shaped parts comprise outwardly extending extensions of the outer bearing seats of the shell bearings, said extensions covering the frontal ends of the shell.

6. Roller according to claim 1, of which the shaft exists of two shaft tubs integrally with the shell and to be journalled rotatably in the printing machine, **characterized** in that the shaft tubs and shell are made of a plastic material and that the jackets are provided at the shaft tubs.

7. Roller according to claim 6, **characterized** in that the axially innermost ends of the jackets comprise radially outwardly extending parts covering the frontal ends of the shell.

## Patentansprüche

1. Walze, wie Druckwalze, Führungswalze, Tintenwalze, Feuchtwalze oder Transferwalze, insbesondere zur Anwendung in einer Druckmaschine, wie z.B. einer Zeitungsdruckmaschine, mit einer zentralen Welle, die in der Druckmaschine zu lagern ist, sowie einer Hülle, die sich konzentrisch um diese Welle erstreckt, wobei die Hülle und die Welle im wesentlichen aus Kunststoffmaterial hergestellt sind und wobei zumindest an beiden Enden der Welle jeweils Metallummantelungen, wie z.B. Stahlummantelungen, vorgesehen sind, die sich bis zu dem jeweiligen Stirnende der Welle erstrecken.

2. Walze nach Anspruch 1, mit einer zentralen Welle, die stationär auf der Druckmaschine gelagert wird sowie eine Hülle die rotierend auf der zentralen Welle gelagert wird**, dadurch gekennzeichnet, daß** die Ummantelungen sich nach innen zumindest über die Hüllenlager hinaus erstrecken.

3. Walze nach Anspruch 2, **dadurch gekennzeichnet, daß** beide Ummantelungen vereint sind, wodurch sie eine einzige Ummantelung bilden, die sich entlang der gesamten Länge der Welle erstreckt.

4. Walze nach Anspruch 1, 2 oder 3, **dadurch gekennzeichnet, daß** die Frontenden der Hülle ebenfalls ummantelungsförmige Teile aus Metall, wie z.B. aus Stahl, umfassen.

5. Walze nach Anspruch 4, **dadurch gekennzeichnet, daß** die ummantelungsförmigen Teile sich nach außen erstreckende Überstände der äußeren Lagersitze der Hüllenlager besitzen, wobei diese Überstände die Frontenden der Hülle bedecken.

6. Walze nach Anspruch 1, wobei die Welle aus zwei einstückig mit der Hülle ausgeführten Hohlwellen besteht, die rotierend in der Druckmaschine gelagert werden, **dadurch gekennzeichnet, daß** diese Hohlwellen und die Hülle aus einem Kunststoffmaterial hergestellt sind und daß an den Hohlwellen Ummantelungen vorgesehen sind.

7. Walze nach Anspruch 6, **dadurch gekennzeichnet, daß** die axial innen liegenden Enden der Ummantelungen sich radial nach außen erstreckende Teile umfassen, die die Frontenden der Hülle bedecken.

## Revendications

1. Rouleau, tel que rouleau d'impression, rouleau de guidage, rouleau encreur, rouleau de mouillage ou rouleau de transfert, notamment en vue d'une application dans une machine à imprimer, telle qu'une machine d'impression de journaux, comprenant un arbre central devant tourillonner dans la machine à imprimer et une coquille s'étendant concentriquement autour dudit arbre, dans lequel la coquille et l'arbre sont essentiellement constitués de matière plastique et, à au moins les deux extrémités dudit arbre, on prévoit des chemises respectives en métal, tel que de l'acier, qui s'étendent jusqu'à l'extrémité frontale respective dudit arbre.

2. Rouleau selon la revendication 1, comprenant un arbre central monté sur paliers, de façon fixe, sur la machine à imprimer et une coquille devant tourillonner à rotation sur ledit arbre central caractérisé en ce que les chemises s'étendent vers l'intérieur, au moins au-delà des paliers de la coquille.

3. Rouleau selon la revendication 2, caractérisé en ce que les deux chemises sont rendues unitaires, définissant une chemise unique s'étendant le long de toute la longueur dudit arbre.

4. Rouleau selon la revendication 1, 2 ou 3, caractérisé en ce que les extrémités frontales de la coquille comprennent également des parties en forme de chemise, en métal, tel que de l'acier.

5. Rouleau selon la revendication 4, caractérisé en ce que les parties en forme de chemise comportent des saillies, s'étendant vers l'extérieur des sièges de paliers extérieurs des paliers de la coquille, lesdites saillies recouvrant les extrémités frontales de la coquille.

6. Rouleau selon la revendication 1, dans lequel l'arbre comporte deux tubes d'arbre faisant partie intégrante de la coquille et devant tourillonner à rotation dans la machine à imprimer, caractérisé en ce que les tubes d'arbre et la coquille sont constitués d'une matière plastique et en ce que les chemises sont prévues sur les tubes d'arbre.

7. Rouleau selon la revendication 6, caractérisé en ce que les extrémités axialement les plus à l'intérieur des chemises comprennent des parties s'étendant radialement vers l'extérieur, recouvrant les extrémités frontales de la coquille.
